# EUROPEAN PATENT APPLICATION

(11) **EP 2 296 161 A2**
(43) Date of publication of application: **16.03.2011**
(21) Application number: 10175763.1
(22) Date of filing: 08.09.2010
(51) Int. Cl.: H01J 9/18

(54) **Image display apparatus manufacturing method**

(30) Priority: 14.09.2009 JP 2009211712
(71) Applicant: Canon Kabushiki Kaisha, Tokyo 146-8501 (JP)
(72) Inventor: Hasegawa, Mitsutoshi, Tokyo 146-8501 (JP); Matsumoto, Mamo, Tokyo 146-8501 (JP); Saito, Tomohiro, Tokyo 146-8501 (JP)
(74) Representative: TBK-Patent

(57) **Abstract**

A bonding step of an image display apparatus manufacturing method includes, after bringing a first or second substrate opposite to a face of a frame member having a bonding material thereon into contact with the bonding material, bonding the first or second substrate opposite to the face of the frame member having the bonding material thereon and the frame member to each other, by irradiating a laser beam to the bonding material through at least a underlying layer. Here, the underlying layer includes a material which absorbs the laser beam easily, and the laser beam is irradiated to a predetermined range. Thus, in bonding of base materials by irradiation of the laser beam, it is possible to reduce damages such as occurrence of disconnection and short circuit in wirings, and achieve reliability and excellent airtightness of the image display apparatus.

## Description

### BACKGROUND OF THE INVENTION

### Field of the Invention

The present invention relates to an image display apparatus manufacturing method in which bonding of base materials is performed by irradiation of a laser beam.

### Description of the Related Art

In an image display apparatus of a field emission type, voltage is applied to a high vacuum region formed between a face plate and a rear plate, and electrons emitted from an electron-emitting device region on the rear plate are irradiated to a phosphor region on the face plate to cause phosphors in the phosphor region to emit light, whereby an image is displayed. Here, as a bonding method which can be used when bonding various base materials such as the face plate, the rear plate and the like, there is a method disclosed in Japanese Patent Application Laid-Open No. 2000-106108 or a method disclosed in Japanese Patent Application Laid-Open No. 2008-517446 (Translation of PCT Application).

Japanese Patent Application Laid-Open No. 2000-106108 describes a method of manufacturing a cathode ray tube which includes a face plate having a phosphor layer of drawing an image of the cathode ray tube and a funnel cone portion of acting as an outer container of the cathode ray tube and in which the funnel cone portion and the face plate respectively having different thermal expansion coefficients have been glass-bonded (frit-sealed) to each other. In this method, glass frit to be used in the glass bonding has two or more kinds of different thermal expansion coefficients, and the glass frit is used by laminating components so as to gradually change the thermal expansion coefficient of the glass frit between the thermal expansion coefficient of the face plate and the thermal expansion coefficient of the funnel cone portion.

Japanese Patent Application Laid-Open No. 2008-517446 (Translation of PCT Application) describes a method of bonding two plates to each other as dynamically changing, according to need, movement speed and/or power of a laser beam emitted from a laser to uniformly heat frit along a sealing line having an electrode occupied area and a non-electrode area.

However, when these methods are used when the face plate, the rear plate and the like are bonded, there is a possibility that damages, especially disconnection and/or short circuit of wirings, occur in respective base materials. Further, there is a possibility that sufficient airtightness cannot be obtained. Thus, further improvement is desired.

### SUMMARY OF THE INVENTION

The present invention aims to provide an image display apparatus manufacturing method which can, in bonding of base materials by irradiation of a laser beam, reduce damages to the base materials due to the laser beam, especially suppress occurrence of disconnection and short circuit in wirings, and achieve reliability and excellent airtightness.

The present invention is directed to an image display apparatus manufacturing method which includes a bonding step of positioning a frame member between a first substrate having numerous electron-emitting devices and a second substrate positioned opposite to the first substrate and having a fluorescent film of displaying an image in response to irradiation of electrons emitted from the electron-emitting devices, and bonding the frame member and the first substrate to each other and the frame member and the second substrate to each other, wherein the image display apparatus manufacturing method is characterized in that: the bonding step further includes arranging an underlying layer on the frame member, arranging, on the underlying layer, a bonding material having a width equal to or smaller than a width of the underlying layer, facing a bonding face of the first substrate or the second substrate and a face of the frame member on which the bonding material has been arranged, to each other, and, after bringing the first substrate or the second substrate opposite to the face of the frame member on which the bonding material has been arranged into contact with the bonding material, bonding the first substrate or the second substrate opposite to the face of the frame member on which the bonding material has been arranged and the frame member to each other, by irradiating a laser beam to the bonding material through at least the underlying layer; the underlying layer includes a material which absorbs the laser beam easily as compared with the bonding material; and the laser beam is irradiated to a range which is equal to or larger than the width of the bonding material and less than the width of the underlying layer.

Further, the present invention is directed to a laser bonding method which comprises: arranging an underlying layer on a base material; arranging, on the underlying layer, a bonding material having a width equal to or smaller than a width of the underlying layer; facing a bonding face of another base material and a face of the base material on which the bonding material has been arranged, to each other; and, after bringing the another base material into contact with the bonding material, bonding the two base materials to each other by irradiating a laser beam to the bonding material through at least the underlying layer, wherein the laser bonding method is characterized in that the underlying layer includes a material which absorbs the laser beam easily as compared with the bonding material, and the laser beam is irradiated to a range which is equal to or larger than the width of the bonding material and less than the width of the underlying layer.

Further features of the present invention will become apparent from the following description of exemplary embodiments with reference to the attached drawings.

### BRIEF DESCRIPTION OF THE DRAWINGS

FIG. 1 is a partial cutaway perspective diagram illustrating an example of an image display apparatus to which the present invention is applied.

FIG. 2 is a cross section diagram illustrating a process flow (at a bonding section) according to the present invention.

FIG. 3 is a two-dimensional diagram illustrating an example of the bonding section of the image display apparatus according to the present invention.

FIGS. 4A and 4B are partial cross section diagrams each illustrating an example of the bonding section of the image display apparatus according to the present invention.

### DESCRIPTION OF THE EMBODIMENTS

An image display apparatus manufacturing method is directed to a manufacturing method which includes a bonding step of positioning a frame member between a first substrate having numerous electron-emitting devices and a second substrate positioned opposite to the first substrate and having a fluorescent film of displaying an image in response to irradiation of electrons emitted from the electron-emitting devices, and bonding the frame member and the first substrate to each other and the frame member and the second substrate to each other, wherein the manufacturing method is characterized in that: the bonding step further includes arranging an underlying layer on the frame member, arranging, on the underlying layer, a bonding material having a width equal to or smaller than a width of the underlying layer, facing a bonding face of the first substrate or the second substrate and a face of the frame member on which the bonding material has been arranged, to each other, and, after bringing the first substrate or the second substrate opposite to the face of the frame member on which the bonding material has been arranged into contact with the bonding material, bonding the first substrate or the second substrate opposite to the face of the frame member on which the bonding material has been arranged and the frame member to each other, by irradiating a laser beam to the bonding material through at least the underlying layer; the underlying layer includes a material which absorbs the laser beam easily as compared with the bonding material; and the laser beam is irradiated to a range which is equal to or larger than the width of the bonding material and less than the width of the underlying layer.

According to the present invention, it is possible to provide the image display apparatus manufacturing method, which can reduce damages to the base materials due to the laser beam, especially suppress occurrence of disconnection in the wirings, short circuiting, and break/crack, and achieve reliability and excellent airtightness.

Hereinafter, the embodiment of the present invention will be described. A manufacturing method according to the present invention can be used to manufacture an image display apparatus, in which, for example, a fluorescent film and an electron accelerating electrode are formed on a face plate of a vacuum envelope and an electron source is formed on a rear plate. Further, a laser bonding method according to the present invention can be widely applied to a case of manufacturing an airtight container by bonding plural base materials.

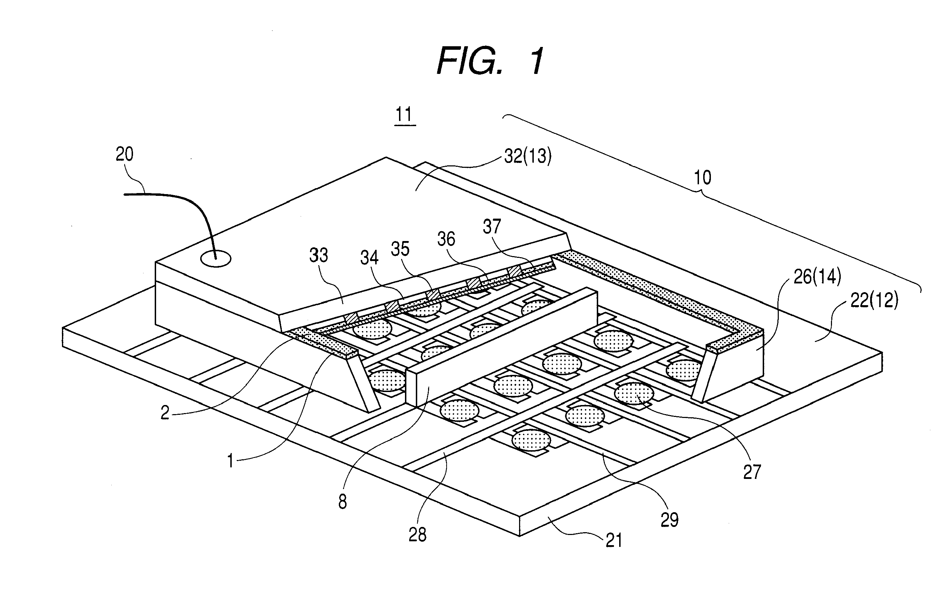

FIG. 1 is a partial cutaway perspective diagram illustrating an example of an image display apparatus to which the present invention is applied. An image display apparatus 11 has a first substrate 12, a second substrate 13 and a frame member 14 as base materials. An envelope 10, which has a sealed up internal space, is formed by a process that surfaces of the first substrate 12 and the frame member 14 oppositely faced are bonded with each other and surfaces of the second substrate 13 and the frame member 14 oppositely faced are bonded with each other. The inside of the envelope 10 is maintained to be a vacuum state. In the image display apparatus 11, the first substrate 12 is a rear plate 22, the second substrate 13 is a face plate 32 and the frame member 14 is a support frame 26. The rear plate 22 and the face plate 32 are respectively bonded with the support frame 26. The rear plate 22 and the face plate 32 respectively have glass substrates 21 and 33.

On the glass substrate 21 of the rear plate 22, numerous electron-emitting devices 27 for emitting electrons in response to an image signal are provided, and wirings (X-directional wirings 28 and Y-directional wirings 29) used for operating the respective electron-emitting devices 27 in response to the image signal are formed. On the glass substrate 33 of the face plate 32, fluorescent films 34, which display an image by a process that electrons emitted from the electron-emitting devices 27 are irradiated and the light is emitted, are provided. On the glass substrate 33, black stripes 35 are further provided. The fluorescent films 34 and the black stripes 35 are provided in such a manner that they are alternately arranged. On the fluorescent films 34, metal backs 36 composed of Al thin films are formed. The metal backs 36, which have the function as electrodes of attracting electrons, receive the potential supplied from a high voltage terminal Hv 20 provided at the envelope 10. On each of the metal backs 36, a non-evaporable getter 37 composed of a Ti thin film is formed.

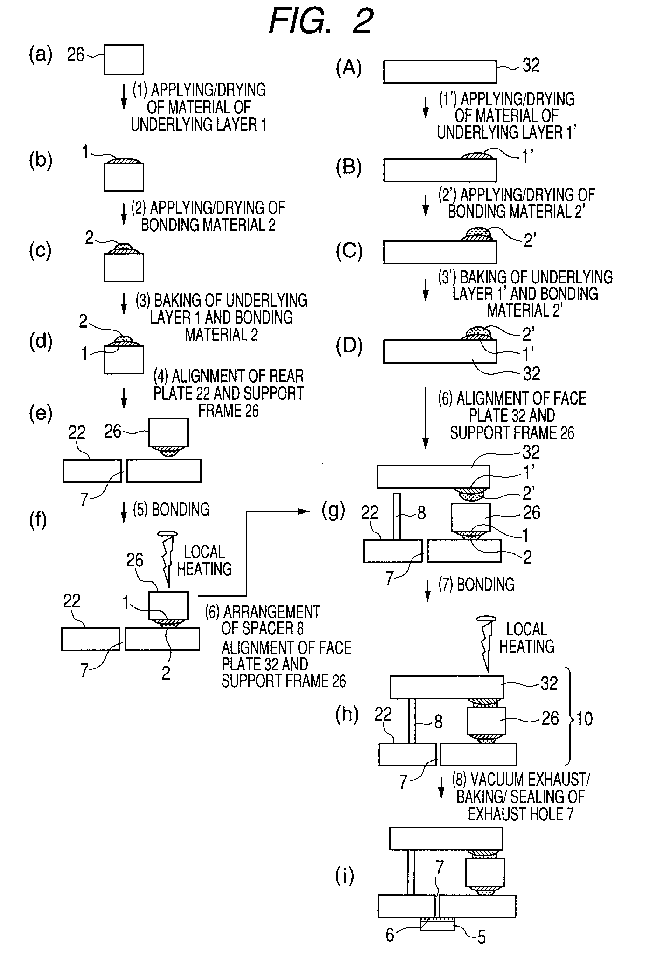

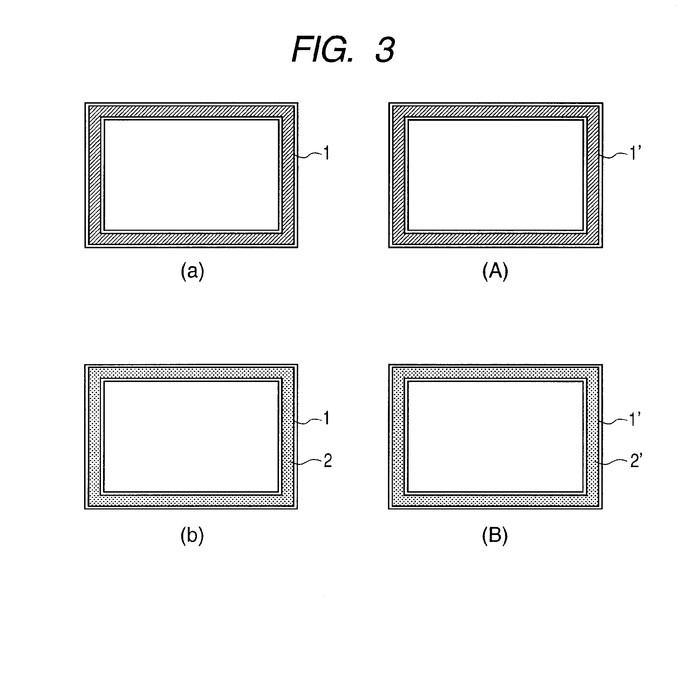

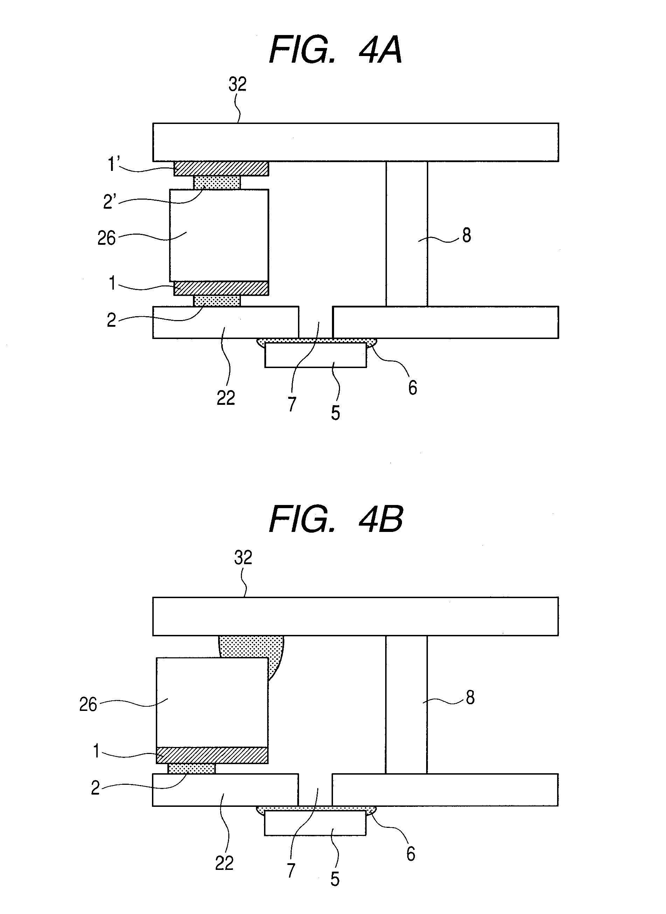

Hereinafter, an example of embodiments of the present invention will be specifically described with reference to FIG. 2, 3, 4A and 4B. However, the present invention is not limited to this case indicated in these drawings. FIG. 2 is a cross section diagram illustrating a process flow (at a bonding section) according to the present invention. FIG. 3 is a two-dimensional diagram of the bonding section. FIG. 4A and 4B are cross section diagrams respectively illustrating examples of the bonding section.

(Process (1): applying/drying of material of underlying layer 1)

At first, an underlying layer 1, of which an absorption rate of a laser beam is larger than that of a bonding material 2 to be applied later, is formed into the desired width and thickness by a screen printing method on a one-side surface of the support frame 26 along its peripheral length ((a) in FIG. 2). Thereafter, the formed layer is dried at 120°C ((b) in FIG. 2, (a) in FIG. 3). The width of the underlying layer 1 is set to become larger than an irradiation diameter of a laser beam to be irradiated described later. According to this procedure, a laser beam in performing a bonding process is absorbed in the underlying layer 1, and a laser bonding process of reducing the damage to wirings to be excellent in reliability and airtightness can be performed. Here, it is preferable that the width of the underlying layer 1 is 0.1mm or more and 20mm or less. Note that the width of the underlying layer 1 corresponds to a cross section of the underlying layer 1 for a surface of the support frame 26 and indicates the minimum width in a cross section of which an area becomes the largest area. And, the irradiation diameter of the laser beam indicates an effective diameter of the laser beam, and in a case that the shape of a laser beam spot is a circular spot, the irradiation diameter indicates a diameter of that circular spot, and in a case that the shape of a laser beam spot is a noncircular spot, the irradiation diameter indicates the maximum width of the noncircular spot. It is preferable that the irradiation diameter of the laser beam is 0.05mm or more and 20mm or less in the width direction and is 0.05mm or more and 40mm or less in the scanning direction.

As to thickness and an absorption rate of the underlying layer 1, these factors are properly designed so as to attenuate to such the laser power of not influencing the wirings (X-directional wirings 28 and Y-directional wirings 29) when the laser beam is irradiated. Note that a dispenser method and an offset printing method other than the screen printing method are also effective as an applying method of the material of the underlying layer 1.

(Process (2): applying/drying of bonding material 2)

Thereafter, the bonding material 2 is formed into the desired width and thickness by the screen printing method on the underlying layer 1 similar to a case of forming the underlying layer 1 ((c) in FIG. 2). In order to irradiate the laser beam on a whole surface of the bonding material 2, the width of the bonding material 2 is set to become equal to or less than the irradiation diameter of the laser beam. In addition, the width of the bonding material 2 is set to become equal to or less than that of the underlying layer 1. It is preferable that the width of the bonding material 2 is 0.1mm or more and 20mm or less.

Conditions for bonding the materials of the underlying layer 1 and the bonding material 2, which are applicable to the image display apparatus manufactured by the method according to the present invention are as follows:
(1) heat resistance is given in the in-vacuum baking (high vacuum forming) process;
(2) airtightness is high, and high vacuum (vacuum leakage minimum, gas permeableness minimum) can be maintained (however, only at portions to which maintenance of vacuum is necessary);
(3) adhesiveness to the glass member is high;
(4) a low outgassing (high vacuum maintaining) characteristic is given; and
(5) a less warp of the image display apparatus after the bonding is secured, and safety is high.

As the material of the bonding material 2 of satisfying the above requirements, at least, glass frit obtained by burning out the organic binder or metal such as Al, Ti, Ni or the like or the alloy thereof can be enumerated.

Further, as the material of the underlying layer 1, such the material obtained by containing pigment, dye or the like, which can easily absorb the laser beam, into the glass frit serving as the material of the bonding material 2 and then burning out the organic binder can be used. Alternatively, the metal or the alloy which can more absorb the laser beam than the bonding material 2 can be used.

As the material of the pigment, the dye or the like which can easily absorb the laser beam, for example, manganese oxide, carbon or the like can be enumerated.

As the metal which can be used for the underlying layer 1, In, Sn, Al, Cu, Au, Ag, Ti, Fe, Cr or the like can be enumerated. At least one kind of metal which can easier absorb the laser beam than the metal to be used for the bonding material 2 can be properly selected from among those metals. More specifically, when Al is used for the bonding material 2, Ti, Fe or the like can be used for the underlying layer 1. When Ti is used for the bonding material 2, Cr or the like can be used for the underlying layer 1. When Ni is used for the bonding material 2, Cr or the like can be used for the underlying layer 1.

The glass frit obtained by burning out at least the organic binder is used for the materials of the bonding material 2 and the underlying layer 1, thereby reducing generation of air bubbles from the bonding material 2 and the underlying layer 1 in performing the bonding process, and the excellent airtightness can be obtained. When the metal is used for the materials of the bonding material 2 and the underlying layer 1, since the air bubbles are not generated in performing the bonding process, the excellent airtightness can be similarly obtained.

When the glass frit obtained by containing the pigment, the dye or the like, which can easily absorb the laser beam, into the glass frit of the bonding material 2 and burning out the organic binder is used for the material of the underlying layer 1, the thermal expansion coefficients and the melting temperature of the underlying layer 1 and the bonding material 2 almost become the same level. Consequently, the stress at a bonding section is reduced, and a bonding process more excellent in the airtightness with very little break/crack can be performed.

In the present embodiment, the glass frit of containing the organic binder is used for the materials of the underlying layer 1 and the bonding material, and the material which can easily absorb the laser beam is contained in the underlying layer 1.

(Process (3): baking of underlying layer 1 and bonding material 2)

Next, in order to burn out the organic substances contained in the glass frit of the underlying layer 1 and the bonding material 2, the heating and baking processes are performed at 350°C or more and 600°C or less ((d) in FIG. 2, (b) in FIG. 3). By performing the heating and baking processes at 350°C or more and 600°C or less, since the generating amount of air bubbles generated from the underlying layer 1 and the bonding material 2 in performing the bonding process can be reduced, the more excellent airtightness can be obtained. More preferably, the temperature is at 380°C or more and 500°C or less.

(Process (1'): applying/drying of material of underlying layer 1')

An underlying layer 1', of which an absorption rate of the laser beam is larger than that of a bonding material 2' to be applied later, is formed into the desired width and thickness by a screen printing method on a surface opposite to the support frame 26 of the face plate 32 along its peripheral length ((A) in FIG. 2). Thereafter, the formed layer is dried at 120°C ((B) in FIG. 2, (A) in FIG. 3). The width of the underlying layer 1' is set to become larger than the irradiation diameter of the laser beam to be irradiated later. As to thickness and an absorption rate of the underlying layer 1', it is properly designed so as to attenuate to such the laser power of not influencing the underlying layer 1 and the bonding material 2 formed in the processes (1) to (3) and the wirings (X-directional wirings 28 and Y-directional wirings 29) when the laser beam is irradiated. And, the same material as that of the underlying layer 1 can be used for the material of the underlying layer 1'.

(Process (2'): applying/drying of bonding material 2')

Thereafter, the bonding material 2' is formed into the desired width and thickness by the screen printing method on the underlying layer 1' similar to a case of forming the underlying layer 1' ((C) in FIG. 2, (B) in FIG. 3). The width of the bonding material 2' is set to become equal to or less than the irradiation diameter of the laser beam. In addition, the width of the bonding material 2' is set to become equal to or less than that of the underlying layer 1'. The same material as that of the bonding material 2 can be used for the material of the bonding material 2'.

(Process (3'): baking of underlying layer 1' and bonding material 2')

Next, in order to burn out the organic substances contained in the underlying layer 1' and the bonding material 2', the heating and baking processes are performed at 350°C or more and 600°C or less ((D) in FIG. 2).

(Process (4): alignment of rear plate 22 and support frame 26)

Next, the support frame 26 and a bonding surface of the rear plate 22 are set to be faced so that the bonding material 2 contacts with a predetermined position on the rear plate 22, and the alignment is performed ((e) in FIG. 2). Note that an exhaust hole 7 used for vacuumizing the inside of a container to be described later is provided at the rear plate 22.

(Process (5): bonding of rear plate 22 and support frame 26)

A local heating process is performed by irradiating the laser beam to the bonding material 2 through the underlying layer 1 while applying the pressure from a side of the support frame 26. According to this process, the bonding material 2 is melted and hardened, and the rear plate 22 is bonded with the support frame 26 ((f) in FIG. 2). The laser beam is irradiated to a range equal to or larger than the width of the bonding material 2 and less than the width of the underlying layer 1. Due to this bonding process, the airtightness between the rear plate 22 and the support frame 26 is ensured, and the damage to the wirings (X-directional wirings 28 and Y-directional wirings 29) of the rear plate 22 caused by the laser beam, which transmits through the underlying layer 1, is reduced, and the rear plate 22 and the support frame 26 can be tightly fixed while continuously reducing the disconnection of wirings or the short-circuiting. As wavelength of the laser beam, it is preferable that the wavelength is 248nm or more and 1000nm or less. As an absorption rate of the laser beam by the underlying layer 1, it is preferable that the absorption rate is 50% or more and 100% or less. As a method of applying the pressure, it is allowed to weight mechanically or apply the atmospheric pressure while reducing the pressure.

(Process (6): arrangement of spacer 8, alignment of face plate 32 and support frame 26)

Next, a spacer 8 is arranged on the wirings (X-directional wirings 28 and Y-directional wirings 29) of the rear plate 22. Thereafter, alignment of the rear plate 22 and the face plate 32 is performed so that the bonding material 2', which was formed on the face plate 32, contacts with the other surface of the support frame 26, which was bonded with the rear plate 22, at a predetermined position ((g) in FIG. 2).

(Process (7): bonding of face plate 32 and support frame 26)

A local heating process is performed by irradiating the laser beam to the bonding material 2' through the underlying layer 1' while applying the pressure from a side of the face plate 32. According to this process, the bonding material 2' is melted and hardened, and the face plate 32 is bonded with the support frame 26 ((h) in FIG. 2). The laser beam is irradiated to a range equal to or larger than the width of the bonding material 2' and less than the width of the underlying layer 1'. At this time, the spacer 8 contacts with the face plate 32, and a distance between the rear plate 22 and the face plate 32 is set to become constant. As a method of applying the pressure, it is allowed to weight mechanically or apply the atmospheric pressure while reducing the pressure.

Herewith, airtightness is continuously ensured and the damage to the wirings (X-directional wirings 28 and Y-directional wirings 29) of the rear plate 22 is reduced, and a safely and tightly fixed envelope 10, which suppresses the disconnection of wirings or the short-circuiting and has high reliability with very little break/crack, can be obtained.

(Process (8): vacuum exhaust/baking/sealing of exhaust hole 7)

In order to increase the degree of vacuum of an internal space of the envelope 10, a vacuum exhausting process is performed while performing a baking process at a predetermined temperature. More specifically, the envelope 10 is located inside a vacuum chamber (not illustrated), and the degree of vacuum inside the chamber is decreased to a level of 10⁻³Pa while vacuum exhausting the inside of the envelope 10 from the exhaust hole 7, and whole of the envelope 10 is heated to make the non-evaporable getter 37 activate. Additionally, the exhaust hole 7 is sealed up by a sealing material 6 and a sealing cover 5 to manufacture the image display apparatus 11. A cross section of the obtained image display apparatus 11 has, for example, such the constitution as illustrated in FIG. 4A. It is preferable that the material of the sealing cover 5 is the same as that of the rear plate 22. However, the metal such as Al, Ti, Ni or the like or the alloy thereof which is not melted in a baking process in the vacuum is available. Even if performing the bonding process by the local heating process indicated in Process (7) after the baking process ((i) in FIG. 2) indicated in Process (8), the same effect is obtained. However, in this case, it is required that the laser beam irradiation is performed inside the vacuum chamber.

In the above-mentioned embodiment, although a method according to the present invention is applied to both the bonding of the rear plate 22 and the support frame 26 and the bonding of the face plate 32 and the support frame 26, a method of the present invention may be applied only to either one. For example, a unit obtained by previously bonding the face plate 32 with the support frame 26 is used, and a method of the present invention may be applied to the bonding of the rear plate 22 and the support frame 26. In this case, a cross section of the image display apparatus to be obtained has, for example, such the constitution as illustrated in FIG. 4B. In the present embodiment, although the bonding material 2(2') is single layer, if the laser beam is irradiated through the underlying layer 1(1'), the underlying layer 1(1') and the bonding material 2(2') may be formed in plural layers. In this case, the material of the underlying layers 1(1') and the material of the bonding material 2(2') may be different from each other.

Hereinafter, the present invention will be described in detail by quoting concrete examples.

(Example 1)

An image display apparatus according to the present example has the same constitution as that of the image display apparatus 11 which is schematically illustrated in FIG. 1. The image display apparatus 11 has the envelope 10 composed of the rear plate 22, the support frame 26 and the face plate 32. The rear plate 22 and the face plate 32 are respectively bonded with the support frame 26 by the underlying layers 1 and 1' and the bonding materials 2 and 2' existing between the support frame 26 and the respective plates.

As to the rear plate 22 of the image display apparatus 11 according to the present example, plural (240 rows × 720 columns) surface conduction electron-emitting devices 27 are electrically connected to the X-directional wirings 28 and the Y-directional wirings 29 on the glass substrate 21 to be wired into a passive matrix form. As to the face plate 32, the fluorescent films 34 composed of stripe-like phosphors (R, G and B) (not illustrated) and the black stripes 35 are alternately laid out on the glass substrate 33. After forming the metal back 36 composed of an Al thin film to have thickness of 0.1µm by a sputtering method on the fluorescent film 34, a Ti film was formed to have thickness of 0.1µm by an electron beam vacuum vapor deposition method as the non-evaporable getter 37.

Hereinafter, the image display apparatus manufacturing method according to this example will be described by referring to the attached drawings.

(Process (1))

The 3.0WT% pigment consisted of manganese oxide was blended in terpineol, "Elvacite 2043™" (available from DuPont) and Bi-based lead-free glass frit of BAS115 base (available from ASAHI GLASS CO., LTD.: the thermal expansion coefficient α = 79 × 10⁻⁷/°C) serving as the base material of the underlying layer 1, whereby the paste was confected. After this paste was formed to have width of 2mm and thickness of 10µm along the peripheral length on the support frame 26 by the screen printing method, the drying process was performed at 120°C, and the underlying layer 1 was formed ((b) in FIG. 2, (a) in FIG. 3).

(Process (2))

Next, the paste obtained by the procedure that the 0.5WT% pigment consisted of manganese oxide was blended in terpineol, "Elvacite 2043™" and Bi-based lead-free glass frit of BAS115 base (available from ASAHI GLASS CO., LTD.: the thermal expansion coefficient α = 79 × 10⁻⁷/°C) serving as the base material of the bonding material 2, was confected. As to this paste, since the blended amount of the manganese oxide serving as the pigment is less than that in the paste used as the material of the underlying layer 1, the laser beam is not easily absorbed. This paste was applied on the dried underlying layer 1 to have width of 1mm and thickness of 10µm by the screen printing method similar to a case of the process (1), and the bonding material 2 was formed ((c) in FIG. 2, (b) in FIG. 3).

(Process (3))

Then, the heating and baking processes were performed at 480°C in order to burn out the organic substances in the underlying layer 1 and the bonding material 2 ((d) in FIG. 2).

(Process (1'))

The paste obtained by the procedure that the 3.0WT% pigment consisted of manganese oxide was blended in terpineol, "Elvacite 2043™" and Bi-based lead-free glass frit of BAS115 base (available from ASAHI GLASS CO., LTD.: the thermal expansion coefficient α = 79 × 10⁻⁷/°C) serving as the base material of the underlying layer 1', was confected. After this paste was formed to have width of 2mm and thickness of 10µm along the surface on the face plate 32 opposite to the support frame 26 by the screen printing method, the drying process was performed at 120°C, whereby the underlying layer 1' was formed ((B) in FIG. 2, (A) in FIG. 3).

(Process (2'))

Next, the paste obtained by the procedure that the 0.5WT% pigment consisted of manganese oxide was blended in terpineol, "Elvacite 2043™" and Bi-based lead-free glass frit of BAS115 base (available from ASAHI GLASS CO., LTD.: the thermal expansion coefficient α = 79 × 10⁻⁷/°C) serving as the base material of the bonding material 2', was confected. This paste was formed to have width of 1mm and thickness of 10µm on the dried underlying layer 1' by the screen printing method similar to the case of the process (1'). According to this procedure, the bonding material 2' was formed ((C) in FIG. 2, (B) in FIG. 3).

(Process (3'))

Then, the heating and baking processes were performed at 480°C in order to burn out the organic substances in the underlying layer 1' and the bonding material 2' ((D) in FIG. 2).

(Process (4))

The alignment of the support frame 26 and the rear plate 22 was performed to bring the bonding material 2 into contact with the rear plate 22 having the exhaust hole 7 at a predetermined position ((e) in FIG. 2).

(Process (5))

Then the local heating process was performed to the bonding material 2 by irradiating the semiconductor laser beam, of which the wavelength is 980nm, the output power is 130W and the effective diameter (irradiation diameter) is 1mm, through the underlying layer 1 while scanning the semiconductor laser at a speed of 300mm/S, while applying the pressure from the side of the support frame 26. At this time, the semiconductor laser beam was irradiated to a range equal to or larger than the width of the bonding material 2 and less than the width of the underlying layer 1. According to this process, the bonding material 2 was melted and hardened, and the rear plate 22 was bonded with the support frame 26 ((f) in FIG. 2).

(Process (6))

Next, a spacer 8 was arranged on the X-directional wirings 28 and the Y-directional wirings 29 of the rear plate 22 by a conventional method. In addition, the rear plate 22 and the face plate 32 was located after performing the alignment in such a way that the bonding material 2' formed on the face plate 32 was made to be contacted with the other surface of the support frame 26 bonded with the rear plate 22 ((g) in FIG. 2).

(Process (7))

Then a local heating process was performed to the bonding material 2' by irradiating the semiconductor laser beam, of which the wavelength is 980nm, the output power is 130W and the effective diameter (irradiation diameter) is 1mm, through the underlying layer 1' while scanning the semiconductor laser at a speed of 300mm/S, while applying the pressure from the side of the face plate 32. The semiconductor laser beam was irradiated to a range equal to or larger than the width of the bonding material 2' and less than the width of the underlying layer 1'. According to this process, the bonding material 2' was melted and hardened, and the face plate 32 was bonded with the support frame 26 ((h) in FIG. 2). At this time, the spacer 8 contacted with the face plate 32, and a distance between the rear plate 22 and the face plate 32 was set to become constant, and the envelope 10 was formed.

(Process (8))

Next, the envelope 10 was located inside a vacuum chamber (not illustrated), and the whole of the envelope 10 was heated up to 350°C with a state that the degree of vacuum inside the chamber was set at a level of 10⁻³Pa, while vacuum exhausting the inside of the envelope 10 from the exhaust hole 7, and the non-evaporable getter 37 was activated. Thereafter, the exhaust hole 7 was sealed up by the sealing material 6 consisted of In (Indium) and the sealing cover 5 consisted of a glass substrate, and the image display apparatus 11 was manufactured ((i) in FIG. 2).

In the present invention, the underlying layer 1(1') was composed of the material more easily absorbs the laser beam than that of the bonding material 2(2'). In addition, in the processes (1) and (2) (processes (1') and (2')), it is arranged in such a way that the width of the underlying layer 1(1') becomes larger than that of the bonding material 2(2'). Additionally, the semiconductor laser beam was irradiated to a range equal to or larger than the width of the bonding material 2(2') and less than the width of the underlying layer 1(1') through the underlying layer 1(1'). Herewith, the power of laser beam to be irradiated was absorbed in the underlying layer 1(1'), and the damage to the wirings (X-directional wirings 28 and Y-directional wirings 29) of the rear plate 22 could be reduced. According to the above constitution, the image display apparatus, which suppressed the disconnection of wirings or generation of the short-circuiting, having the high reliability, and excellent in the airtightness with very little break/crack to be safely and tightly fixed, could be obtained.

(Example 2)

In this example, the image display apparatus was manufactured by the same method as that in the example 1 except that the support frame 26 and the face plate 32 in the example 1 were previously bonded with by the glass frit, which was in a low level of absorbability of the laser beam, and the processes (1') to (3') were omitted. The cross section diagram of the bonding section is illustrated in FIG. 4B. Also, in this example, the same effect as that in the example 1 could be obtained.

(Example 3)

In this example, as the underlying layer 1(1'), a layer obtained by depositing Ti, of which thickness is 10nm and width is 2mm, by a sputtering method was used in the processes (1) and (1'). In the processes (2) and (2'), as the bonding material 2(2'), a sheet of aluminum foil, of which thickness is 10µm and width is 1mm, was used. And, the image display apparatus was manufactured by the same method as that in the example 1 except that the thermal baking process in the processes (3) and (3') was omitted.

In this example, since metals were respectively used for the underlying layer 1(1') and the bonding material 2(2'), the gas, which was emitted when the whole of the envelope 10 was heated up to 350°C while performing the vacuum exhausting process in the process (8) and the non-evaporable getter 37 was activated, was more reduced, and the image display apparatus excellent in airtightness could be obtained.

In the examples 1 to 3, it was described by use of examples that the non-evaporable getter 37 was located on the face plate 32. However, this getter 37 may be arranged on the wirings of the rear plate 22.

While the present invention has been described with reference to the exemplary embodiments, it is to be understood that the invention is not limited to the disclosed exemplary embodiments. The scope of the following claims is to be accorded the broadest interpretation so as to encompass all such modifications and equivalent structures and functions.
A bonding step of an image display apparatus manufacturing method includes, after bringing a first or second substrate opposite to a face of a frame member having a bonding material thereon into contact with the bonding material, bonding the first or second substrate opposite to the face of the frame member having the bonding material thereon and the frame member to each other, by irradiating a laser beam to the bonding material through at least a underlying layer. Here, the underlying layer includes a material which absorbs the laser beam easily, and the laser beam is irradiated to a predetermined range. Thus, in bonding of base materials by irradiation of the laser beam, it is possible to reduce damages such as occurrence of disconnection and short circuit in wirings, and achieve reliability and excellent airtightness of the image display apparatus.

## Claims

1. An image display apparatus manufacturing method which includes a bonding step of positioning a frame member between a first substrate having numerous electron-emitting devices and a second substrate positioned opposite to the first substrate and having a fluorescent film of displaying an image in response to irradiation of electrons emitted from the electron-emitting devices, and bonding the frame member and the first substrate to each other and the frame member and the second substrate to each other, wherein
the bonding step further includes
a step of arranging an underlying layer on the frame member,
a step of arranging, on the underlying layer, a bonding material having a width equal to or smaller than a width of the underlying layer,
a step of facing a bonding face of the first substrate or the second substrate and a face of the frame member on which the bonding material has been arranged, to each other, and
a step of, after bringing the first substrate or the second substrate opposite to the face of the frame member on which the bonding material has been arranged into contact with the bonding material, bonding the first substrate or the second substrate opposite to the face of the frame member on which the bonding material has been arranged and the frame member to each other, by irradiating a laser beam to the bonding material through at least the underlying layer,
the underlying layer includes a material which absorbs the laser beam easily as compared with the bonding material, and
the laser beam is irradiated to a range which is equal to or larger than the width of the bonding material and less than the width of the underlying layer.

2. The image display apparatus manufacturing method according to Claim 1, wherein
the bonding material and the underlying layer at least include glass frit, and
the image display apparatus manufacturing method at least includes a step of baking the underlying layer and the bonding material at 350°C or more and 600°C or less, before bonding the first substrate or the second substrate opposite to the face of the frame member on which the bonding material has been arranged and the frame member to each other.

3. The image display apparatus manufacturing method according to Claim 2, wherein the underlying layer includes a material which is obtained by further adding a material of absorbing the laser beam easily in a material forming the bonding material.

4. The image display apparatus manufacturing method according to Claim 1, wherein the underlying layer and the bonding material include metal.

5. The image display apparatus manufacturing method according to Claim 4, wherein the underlying layer includes metal or alloy containing at least one kind selected from a group consisting of In, Sn, Al, Cu, Au and Ag.

6. The image display apparatus manufacturing method according to Claim 4 or 5, wherein the bonding material includes metal or alloy containing at least one kind selected from a group consisting of Al, Ti and Ni.

7. A laser bonding method comprising:
a step of arranging an underlying layer on a base material;
a step of arranging, on the underlying layer, a bonding material having a width equal to or smaller than a width of the underlying layer;
a step of facing a bonding face of another base material and a face of the base material on which the bonding material has been arranged, to each other; and
a step of, after bringing the another base material into contact with the bonding material, bonding the two base materials to each other by irradiating a laser beam to the bonding material through at least the underlying layer,
wherein the underlying layer includes a material which absorbs the laser beam easily as compared with the bonding material, and
the laser beam is irradiated to a range which is equal to or larger than the width of the bonding material and less than the width of the underlying layer.
